# EUROPÄISCHE PATENTSCHRIFT

(11) **EP 1 586 872 B1**
(45) Veröffentlichungstag und Bekanntmachung des Hinweises auf die Patenterteilung: **08.10.2014**
(21) Anmeldenummer: 05003756.3
(22) Anmeldetag: 22.02.2005
(51) Int. Cl.: G01F 23/296

(54) **Füllstands-Messvorrichtung vom Schwingungstyp**
Vibrator-type level meter
Capteur de niveau du type vibrateur

(30) Priorität: 16.04.2004 DE 102004019228
(43) Veröffentlichungstag der Anmeldung: 19.10.2005
(73) Patentinhaber: VEGA Grieshaber KG, 77709 Wolfach (DE)
(72) Erfinder: Ohmayer, Gerd, 77716 Haslach (DE); Gruhler, Holger, 78609 Tuningen (DE); Jörn, Jacob, 77709 Kimbach (DE)
(74) Vertreter: Patentanwälte Westphal, Mussgnug & Partner

(56) Entgegenhaltungen:
- DE-A1- 3 625 779
- DE-A1- 4 203 715

## Beschreibung

Die Erfindung bezieht sich auf eine Füllstands-Messvorrichtung mit den oberbegrifflichen Merkmalen des Patentanspruchs 1 bzw. 2.

Aus DE 38 08 481 C2 ist eine Füllstands-Messvorrichtung mit einem Gehäuse und zwei röhrenförmigen, koaxial zueinander angeordneten Schwingkörpern bekannt. In dem inneren dieser Schwingkörper ist quer zu der Längsrichtung eine Antriebs-und Empfangseinrichtung zum Erregen der Schwingkörper zu einer Schwingung bzw. zum Erfassen einer Schwingung der Schwingkörper angeordnet.

Aus DE 42 01 360 C2 ist eine Füllstands-Messvorrichtung mit einem äußeren Schwingkörper und einem inneren Schwingkörper bekannt, wobei die Schwingkörper als zwei Schwingstäbe voneinander beabstandet an einer Membran eines Gehäuses befestigt sind. Die Schwingkörper ragen dabei durch die Membran in den Innenraum des Gehäuses hindurch. Innerhalb des Gehäuses ist eine Antriebs- und Empfangseinrichtung quer zur Längsachse der Schwingkörper angeordnet. Die Antriebs- und Empfangseinrichtung ist dabei mit einer Stirnseite direkt an dem rückseitigen Abschnitt eines der Schwingkörper befestigt. Um die Antriebs- und Empfangseinrichtung unter einer voreinstellbaren Vorspannung zwischen den beiden rückseitigen Abschnitten der Schwingkörper einspannen zu können, weist die Anordnung eine Spanneinrichtung zum Spannen der Antriebs- und Empfangseinrichtung relativ gegen die rückseitigen Abschnitte der Schwingkörper auf. Die Spanneinrichtung besteht aus einer Schraube, welche in eine Durchgangsbohrung mit Innengewinde in dem rückseitigen Abschnitt des anderen Schwingkörpers geschraubt ist, wobei die Spitze der Schraube gegen die zweite Stirnseite der Antriebs- und Empfangseinrichtung gespannt ist. Durch diese Anordnung wird ein Entlasten der Antriebs- und Empfangseinrichtung für den Fall verhindert, dass die Antriebs- und Empfangseinrichtung entlastet und damit außer Betrieb gesetzt wird, wenn eine seitliche Verstellkraft auf den außenseitigen Abschnitt eines der Schwingkörper in seitlicher Richtung auf den anderen Schwingkörper wirkt. Solche Verstellkräfte treten auf, wenn Schüttgut von der Seite her gegen einen der Schwingkörper in Richtung des anderen der Schwingkörper drücken.

Als weiterer Stand der Technik werden die DE 36 25 779 A1 und die DE 42 03 715 A1 genannt.

Die Aufgabe der Erfindung besteht darin, eine Füllstands-Messvorrichtung mit einem äußeren und einem inneren Schwingkörper hinsichtlich der Anordnung der Antriebs-und/oder Empfangseinrichtung zu verbessern, wobei eine Entlastung der Antriebs- und/oder Empfangseinrichtung im Fall seitlich auf den äußeren Schwingkörper einwirkender Verstellkräfte vermieden werden soll.

Diese Aufgabe wird durch eine Füllstands-Messvorrichtung mit den Merkmalen des Patentanspruchs 1 gelöst.

Vorteilhafte Ausgestaltungen sind Gegenstand von abhängigen Ansprüchen.

Ein Ausführungsbeispiel wird nachfolgend anhand der Zeichnung näher erläutert. Es zeigen:
- Fig. 1: eine Teil-Schnittdarstellung durch eine Füllstands-Messvorrichtung mit zwei an einem Gehäuse zueinander koaxial angeordneten Schwingkörpern; und
- Fig. 2: eine Ausschnittsvergrößerung der Füllstands-Messvorrichtung gemäß Fig. 1 zur Veranschaulichung des Übergangsbereichs zwischen einer Membran und einem Übergangskörper.

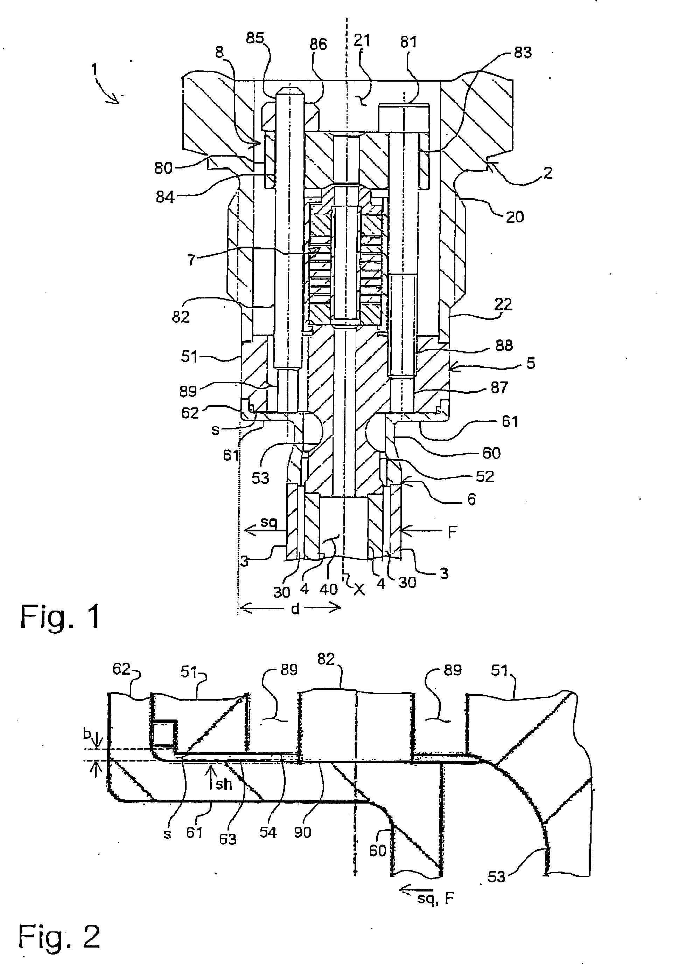

Wie dies aus den Fig. 1 und 2 ersichtlich ist, besteht eine Füllstands-Messvorrichtung 1 aus einer Vielzahl von Einzelkomponenten. Die dargestellte Füllstands-Messvorrichtung 1 ist koaxial um eine Längsachse X herum ausgebildet, wobei die Übertragung des Grundgedankens auf andere als zylindrische Querschnitte möglich ist. Zur Vereinfachung der Beschreibung werden unter "vorderseitig" Komponenten und Elemente in Richtung des Außenendes von Schwingkörpern, d. h. in Richtung einer Messstelle verstanden. Unter seitlich bzw. quer werden Elemente und Kräfte in einer Ebene senkrecht zur Längsachse X verstanden.

Die Füllstands-Messvorrichtung 1 weist ein Gehäuse 2 auf, welches zur Aufnahme und Halterung der übrigen Komponenten dient. Am Außenumfang weist das Gehäuse 2 ein Einschraubgewinde 20 auf, über welches das Gehäuse 2 in einer Gewindeöffnung eines Behältnisses einschraubbar ist. Im in ein Behältnis eingeschraubten Zustand ragt der vorderseitige Abschnitt des Gehäuses 2 mit daran befindlichen Schwingkörpern 3, 4 in den Innenraum des Behältnisses hinein, um den Befüllungszustand des Behältnisses zu überwachen. Der rückseitige Abschnitt des Gehäuses 2 ragt außenseitig aus der Behältniswandung heraus und ermöglicht von der Rückseite her einen Zugriff auf Komponenten in einem Innenraum 21 des Gehäuses 2, insbesondere auf nicht dargestellte elektrische Anschlüsse zum Betreiben der Füllstands-Messvorrichtung 1.

Vorderseizig ist die Umfangswandung 22 des Gehäuses 2 an einem Übergangs- und Befestigungskörper 5 befestigt, insbesondere angeschweisst. Der Übergangs- und Befestigungskörper 5 besteht aus einem vorzugsweise scheibenförmigen rückseitigen Abschnitt 51, an dem rückseitig das Gehäuse 2 befestigt ist, und einem vorderseitigen Abschnitt 52, welcher in vorderseitiger Richtung vom rückseitigen Abschnitt 51 absteht. Am vorderseitigen Ende des vorderseitigen Abschnitts 52 des Übergangs- und Befestigungskörpers 5 ist der innere Schwingkörper 4 der beiden Schwingkörper befestigt, insbesondere angeschweißt. Um die Schwingungsübertragung und die elastische Eigenschaft zu verbessern, weist der Übergangs- und Befestigungskörper 5 im Übergangsbereich zwischen dem rückseitigen Abschnitt 51 und dem vorderseitigen Abschnitt 52 eine Einschnürung 53 mit einer nur dünnen Wandung auf. Vorzugsweise ist der Außenumfang des vorderseitigen Abschnitts 52 des Übergangs-und Befestigungskörpers 5 kleiner oder gleich dem Außenumfang des inneren Schwingkörpers 4 dimensioniert.

Optional kann der Übergangs- und Befestigungskörper 5 auch als einstückiger vorderseitiger Bestandteil des Gehäuses 2 ausgebildet sein.

Der innere Schwingkörper 4 ist röhrenförmig mit einem Innenraum 40 konzentrisch um die Längsachse X der Füllstands-Messvorrichtung 1 verlaufend angeordnet. Der äußere Schwingkörper 3 der beiden Schwingkörper ist ebenfalls röhrenförmig mit einem Innenraum 30 konzentrisch um die Längsachse X verlaufend angeordnet. Der Durchmesser des Innenraums 30 des äußeren Schwingkörpers 3 ist dabei so dimensioniert, dass zwischen der Innenwandung des äußeren Schwingkörpers 3 und der Außenwandung des inneren Schwingkörpers 4 ein freier Raum verbleibt. Dieser freie Raum ist so breit, dass die beiden Schwingkörper 3, 4 auch im in Schwingungen versetzten Zustand nicht aneinander anstoßen.

Das rückseitige Ende des äußeren Schwingkörpers 3 ist an einem Membran- und Befestigungskörper 6 befestigt, insbesondere angeschweißt.

Der Membran- und Befestigungskörper 6 erstreckt sich in rückseitiger Richtung vom äußeren Schwingkörper 3 zum Übergangs- und Befestigungskörper 5 und ist mit seinem rückseitigen Ende am äußeren vorderseitigen Umfangsabschnitt des Übergangs- und Befestigungskörper 5 befestigt, insbesondere angeschweißt. Ein vorderseitiger Abschnitt 60 des Membran- und Befestigungskörpers 6 ist im Wesentlichen rohrförmig ausgebildet und weist eine zumindest abschnittsweise so dünne Wandungsstärke auf, dass ein elastischer Übergang zur Unterstützung der Schwingungsbewegung des äußeren Schwingkörpers 3 ausgebildet wird. Der vorderseitige Abschnitt 60 des Membran- und Befestigungskörpers 6 geht rückseitig in einen sich in seitlicher Richtung erstreckenden Abschnitt über. Dieser sich in seitlicher Richtung erstreckende Abschnitt bildet die eigentliche Membran 61 aus, welche als elastisches Element zur Ankopplung des äußeren Schwingkörpers 3 an den Übergangs-und Befestigungskörper 5 ausgebildet ist. Der außenseitige Umfang der Membran 61 geht einstückig in einen in Längsrichtung, d. h. koaxial zur Längsachse X verlaufenden Befestigungskragen 62 über. Der rückseitige, stirnseitige Abschnitt des Befestigungskragens 62 ist an dem Übergangs-und Befestigungskörper 5 befestigt.

Um eine freie Schwingung des äußeren Schwingkörpers 3 gegenüber dem Übergangs- und Befestigungskörper 5 zu ermöglichen, sind eine dem Gehäuse 2 zugewandte, rückseitige Wandung 63 der Membran 61 und eine dazu benachbarte vorderseitige Wandung 54 des Übergangs- und Befestigungskörper 5 zueinander beabstandet, so dass zwischen diesen ein Spalt s verbleibt. Die Spaltbreite b des Spalts s ist so breit gewählt, dass die beiden zueinander benachbarten Wandungen 63, 54 der Membran 61 bzw. des Übergangs- und Befestigungskörpers 5 im Betrieb unter normalen Messbedingungen nicht aneinander anstoßen.

Gemäß erster Versuche ist bei einer typischen Füllstands-Messvorrichtung 1 eine Spaltbreite b kleiner oder gleich 0,2 mm dazu ausreichend. Bei dieser Füllstands-Messvorrichtung erstreckt sich die Membran 61 vom Außenumfang des äußeren Schwingkörpers 3 in seitlicher Richtung. Das Verhältnis von der seitlichen Membranerstreckung bzw. dem Radius d der Membran mit vorzugsweise 14,5 mm zu der Spaltbreite b beträgt bei dieser Ausführungsform somit vorteilhafterweise 1:72 gemäß einem ersten optimierten Aufbau. Gemäß einem weiteren weniger optimierten Aufbau mit einer Spaltbreite b von 0,3 mm beträgt das Verhältnis 1:48. Diese Verhältnisse gelten für versuchsweise realisierte Aufbauten, weshalb die Umsetzung anderer ebenfalls vorteilhafter Verhältnisse bei veränderten Radien, Materialien oder Spaltbreiten ebenfalls möglich sind.

Rückseitig ist am rückseitigen Abschnitt 51 des Übergangs-und Befestigungskörpers 5 eine Antriebs- und Empfangseinrichtung 7 angeordnet. Die Antriebs- und Empfangseinrichtung 7, optional auch nur eine Antriebseinrichtung oder nur eine Empfangseinrichtung, erstreckt sich koaxial um die Längsachse X und weist vorzugsweise eine Vielzahl von Piezoelementen auf. Die Piezoelemente sind in Richtung der Längsachse X in Schwingungen versetzbar bzw. erfassen in Richtung der Längsachse X einwirkende Schwingungen. Der Anschluss der Piezoelemente erfolgt über nicht dargestellte elektrische Anschlüsse, insbesondere Anschlusskabel.

Um eine sichere Übertragung der Schwingungen zu ermöglichen, ist die Antriebs- und Empfangseinrichtung 7 mittels einer Spanneinrichtung 8 gegen die Rückseite des rückseitigen Abschnitts 51 des Übergangs- und Befestigungskörpers 5 gespannt. Die Spanneinrichtung 8 besteht aus einem rückseitigen Spannelement 80, welches quer zur Längsachse X rückseitig der Antriebs- und Empfangseinrichtung 7 verläuft, sowie aus zumindest einem Befestigungsbolzen 81 und zumindest einem Zug- bzw. Spannbolzen 82. Der Befestigungsbolzen 81 und der Spannbolzen 82 verlaufen von der Rückseite aus durch eine Befestigungsbolzen-Durchtrittsöffnung 83 bzw. durch eine Spannbolzen-Durchtrittsöffnung 84, welche in vorderseitiger Richtung durch das Spannelement 80 hindurch führen. Die Befestigungsbolzen-Durchtrittsöffnung 83 und die Spannbolzen-Durchtrittsöffnung 84 sind dabei so angeordnet, dass der Befestigungsbolzen 81 und der Spannbolzen 82 seitlich neben der Antriebs- und Empfangseinrichtung 7 in vorderseitiger Richtung verlaufen können. Rückseitig weist der Befestigungsbolzen 81 einen Schraubenkopf auf, dessen Durchmesser größer als der Durchmesser der Befestigungsbolzen-Durchtrittsöffnung 83 ist. Der Spannbolzen 82 weist rückseitig ein Spannbolzengewinde 85 auf, auf dem eine Mutter 86 aufgeschraubt ist. Der Außendurchmesser der Mutter 86 ist dabei größer als der Durchmesser der Spannbolzen-Durchtrittsoffnung 84, so dass mit der Mutter 86 das Spannelement 80 rückseitig gegen die Antriebs- und Empfangseinrichtung 7 spannbar ist.

Das vorderseitige Ende des Befestigungsbolzen 81 ragt in eine Befestigungsbohrung 87, welche von der Rückseite her in den rückseitigen Abschnitt 51 des Übergangs- und Befestigungskörpers 5 zumindest teilweise hineinführt und welche ein entsprechendes Innengewinde als Befestigungsbolzengewinde 88 aufweist. Der Befestigungsbolzen 81 ist dadurch zum direkten Verspannen des Spannelements 80 an dem Übergangs- und Befestigungskörper 5 ausgebildet.

Der Spannbolzen 82 ragt mit seinem vorderseitigen Endabschnitt durch eine Spannbolzen-Durchtrittsöffnung 89 in dem rückseitigen Abschnitt 51 des Übergangs- und Befestigungskörpers 5 bis zur Membran 61 hindurch. Der Durchmesser der Spannbolzen-Durchtrittsöffnung 89 ist so groß bemessen, dass der Spannbolzen 82 an den Innenwandungen der Spannbolzen-Durchtrittsöffnung 89 reibungs- und vorzugsweise berührungsfrei anliegt, so dass Schwingungen vom rückseitigen Abschnitt 51 nicht auf den Spannbolzen 82 übertragen werden. Mit seiner stirnseitigen Spannbolzen-Vorderseite 90 ist der Spannbolzen 82 an der rückseitigen Wandung 63 der Membran 61 befestigt, insbesondere angeschweißt.

Durch diese Verspannungsanordnung werden Schwingungen vom rückseitigen Abschnitt der Antriebs- und Empfangseinrichtung 7 über das Spannelement 80 und den Spannbolzen 82 direkt auf die Membran 61 und darüber auf den äußeren Schwingkörper 3 übertragen. Entsprechend werden auch Schwingungen des äußeren Schwingkörpers 3 in umgekehrter Richtung auf den rückseitigen Abschnitt der Antriebs- und Empfangseinrichtung 7 übertragen. Vom vorderseitigen Abschnitt der Antriebs- und Empfangseinrichtung 7 werden Schwingungen über den Übergangs-und Befestigungskörper 5 direkt auf den inneren Schwingkörper 4 übertragen. Schwingungen des inneren Schwingkörpers 4 werden in umgekehrter Richtung direkt auf den vorderseitigen Abschnitt der Antriebs- und Empfangseinrichtung 7 übertragen.

Prinzipiell könnte die Spaltbreite b auch größer gewählt werden, um einen normalen Betrieb der Füllstands-Messvorrichtung 1 zu ermöglichen. Die Begrenzung der Spaltbreite b auf ein Höchstmaß bietet jedoch besondere Vorteile, falls auf den äußeren Schwingkörper 3 eine seitliche Verstellkraft F einwirkt. Oftmals liegt an einer Seite des insbesondere vorderen Endabschnitts des äußeren Schwingkörpers 3 seitlich mehr Schüttgut an, als an der gegenüberliegenden Seite. Dieses Schüttgut bewirkt eine solche Verstellkraft F, welche den äußeren Schwingkörper 3 aus der koaxialen Lage zur Längsachse X seitlich verschwenkt, so dass das vorderseitige Ende des äußeren Schwingkörpers 3 um einen Verstellweg sq seitlich verschwenkt wird. Durch die starre Ausbildung des äußeren Schwingkörpers 3 bewirkt die Verschwenkung eine Verschwenkbewegung im Bereich des Membran-und Befestigungskörpers 6 für den äußeren Schwingkörper 3. Insbesondere wird ein mittlerer und innenseitiger Abschnitt der Membran 61 auf der Seite, zu der hin die Verstellkraft F wirkt, um einen Verstellweg sh der Membran 61 in rückseitiger Richtung verstellt. Diese Verstellung der Membran 61 in rückseitiger Richtung bewirkt zugleich, dass zusammen mit der Membran 61 auch der Spannbolzen 82 um den verstellweg sh in rückseitiger Richtung verlagert wird. Dies führt zwangsläufig zu einer Endlastung des rückseitigen Spannelements 80 der Spanneinrichtung 8. Im Fall einer starken Verstellkraft F, welche einen großen Verstellweg sh der Membran 61 zur Folge hat, würde dies eine Entlastung des Spannelements 80 und zugleich eine Entlastung der Antriebs- und Empfangseinrichtung 7 derart bewirken, dass die Übertragung von Schwingungen von bzw. zur Antriebs- und Empfangseinrichtung 7 gestört oder vollständig unterbrochen werden würde.

Zur Sicherstellung einer ausreichenden Spannkraft auf die Antriebs- und Empfangseinrichtung 7 wird die Spaltbreite b daher so gering festgelegt, dass bei einer Verstellkraft F bzw. bei einem Verstellweg sh größer der Spaltbreite b die rückseitige Wandung 63 der Membran 61 an der vorderseitigen Wandung 54 des rückseitigen Abschnitts 51 des Übergangs- und Befestigungskörpers 5 anschlägt. Durch eine zumindest einzuhaltende Dimensionierung der Spaltbreite b wird somit einerseits sichergestellt, dass die gegenüberliegenden wandungen 63, 54 beim normalen Betrieb nicht aneinander anstoßen. Andererseits wird durch die Festlegung der Spaltbreite b sichergestellt, dass die beiden benachbarten Wandungen 63, 54 aneinander anstoßen, bevor eine unzulässig große Entlastung der Antriebs- und Empfangseinrichtung 7 erfolgt. Besonders optimal ist dabei eine Spannbreite b, welche hinsichtlich der höchst zulässigen Entlastung optimiert wird, um ein aneinander Anstoßen der Wandungen 63, 54 auch in einer Situation zu verhindern, bei der durch eine geringe seitliche Verstellkraft F und somit eine geringe Verstellung der Membran 61 noch ein ausreichender Spielraum für einen zuverlässigen Betrieb ohne Berührung der benachbarten Wandungen 63, 54 ermöglicht wird.

Durch eine solche Anordnung wird somit eine Entlastung des Piezo-Antriebsstapels der Antriebs- und Empfangseinrichtung 7 bei Belastung des äußeren Schwingkörpers 3 mit einem Medium bzw. Schüttgut aus seitlicher Richtung verhindert. Dies führt zu einer höheren Belastbarkeit des Schwingelements bzw. Schwingstabes in Entlastungsrichtung. Vorteilhafterweise führt diese Anordnung nicht nur zum Verhindern der Entlastung bei einer seitlichen Belastung des äußeren Schwingkörpers 3, sondern auch im Fall einer stirnseitigen in rückseitiger Richtung wirkenden Belastung des äußeren Schwingkörpers 3.

Bei Behältnissen, bei denen Füllgut über eine Öffnung seitlich der Füllstands-Messvorrichtung 1 eingefüllt wird, könnte durch eine entsprechende Anordnung der Füllstands-Messvorrichtung 1 eine Verstellkraft F in unzulässiger Richtung, d. h. in Richtung des Spannbolzens 82 theoretisch dadurch vermieden werden, dass die Seite des Spannbolzens 82 der Öffnung des Behälters zugewandt angeordnet wird. Aufgrund der Verwendung des Gehäuses 2 mit dem üblichen Einschraubgewinde 20 ist eine solche Ausrichtung jedoch nur bedingt möglich. Durch die Vorgabe einer geeigneten Spaltbreite b kann auf eine solche Ausrichtung im Idealfall vollständig verzichtet werden.

Im Fall starker verstellkräfte F kann auch eine plastische Verformung der Membran 61 eintreten, wenn diese über einen maximal zulässigen Verstellweg sh hinaus verstellt wird. Durch die Dimensionierung der Spaltbreite b kleiner als diesem maximal zulässigen Verstellweg sh wird außerdem eine plastische Verformung der Membran 61 vermieden. Bei Wegnahme der Verstellkraft F federt die Membran 61 elastisch zurück und gibt den Spalt s mit seiner maximalen Spaltbreite b wieder frei. Vorteilhafterweise ist der Spalt s umlaufend ausgebildet und verhindert so die Überbelastung in alle Richtungen, d. h. auch im Fall einer Belastung des Schwingkörpers 3 in axialer, rückseitiger Richtung. Als Werkstoff für die einzelnen Komponenten, insbesondere für die Membran 61 wird Stahl besonders bevorzugt. Durch die Auswahl geeigneter Werkstoffkombinationen für die Membran 61 kann die für die Membran zulässige Spannung 61 entsprechend der maximalen Spaltbreite b hinsichtlich ihrer elastischen Eigenschaften weiter verbessert werden.

Durch die Festlegung der Spaltbreite b wird somit die Bewegungsstrecke bzw. die Entlastungsstrecke der Spanneinrichtung begrenzt, welche die Membran 61 und die Antriebs- und Empfangseinrichtung 7 so verspannt, dass die Antriebs- und Empfangseinrichtung 7 rückseitig gegen den Übergangskörper 5, 51 gespannt wird.

### Bezugszeichenliste:

1. Füllstands-Messvorrichtung
2. Gehäuse
20 Einschraubgewinde
21 Innenraum von 2
3 Äußerer Schwingkörper
30 Innenraum von 3
4 Innerer Schwingkörper
40 Innenraum von 4
5 Übergangs- und Befestigungskörper
51 Rückseitiger Abschnitt von 5
52 Vorderseitiger Abschnitt von 5
53 Einschnürung von 5
54 Vorderseitige Wandung von 51
6 Membran- und Befestigungskörper für 3 an 5
60 Vorderseitiger Abschnitt von 6
61 Membran
62 Befestigungskragen von 6
63 Rückseitige Wandung von 61
7 Antriebs- und Empfangseinrichtung
8 Spanneinrichtung
80 Spannelement für 7
81 Befestigungsbolzen
82 Spannbolzen
83 Befestigungsbolzen-Durchtrittsöffnung in 80
84 Spannbolzen-Durchtrittsöffnung in 80
85 Spannbolzengewinde
86 Mutter
87 Befestigungsbohrung für 81 in 51
88 Befestigungsbolzengewinde
89 Spannbolzen-Durchtrittsöffnung in 51
90 Spannbolzen-Vorderseite
X Längsachse
F Verstellkraft
sq Verstellweg seitlich
sh Verstellweg von 61.
s Spalt zwischen 63 und 54
b Spaltbreite von s
d Radius von 61

## Patentansprüche

1. Füllstands-Messvorrichtung (1) mit
- einem äußeren Schwingkörper (3) und
- einem inneren Schwingkörper (4),
die koaxial zu einer Längsachse (X) angeordnet sind,
- einer Antriebs- und Empfangseinrichtung (7) zum Erregen der Schwingkörper (3, 4) zu einer Schwingung und zum Erfassen einer Schwingung von den Schwingkörpern (3, 4) und
- einer Membran (61) zum elastischen Ankoppeln des äußeren Schwingkörpers (3), wobei die Membran (61) auf ihrer den Schwingkörpern (3, 4) abgewandten Seite über einen Spalt (s) beabstandet zu einem Übergangskörper (5) sitzt, wobei
- eine Spanneinrichtung (8) zum Spannen der Antriebs-und/oder Empfangseinrichtung (7) relativ gegen die Schwingkörper (3, 4) vorgesehen ist,
- die Membran (61) in seitlicher Richtung zur Längsachse (X) des äußeren Schwingkörpers (3) verläuft und außenseitig in den Übergangskörper (5, 51) übergeht,
- der Übergangskörper (5) zwischen der Antriebs- und/oder Empfangseinrichtung (7) und dem inneren Schwingkörper (4) zum Übertragen der Schwingungen zwischen der Antriebs- und/oder Empfangseinrichtung (7) und dem inneren Schwingkörper (4) angeordnet ist und sich mit einer Wandung (54) teilweise in seitlicher Richtung, d.h. in einer Ebene senkrecht zur Längsachse (x), benachbart zur Membran (61) erstreckt,
- die Spanneinrichtung (8) die Membran (61) und die Antriebs-und/oder Empfangseinrichtung (7) so verspannt sind, dass die Antriebs- und/oder Empfangseinrichtung (7) gegen den Übergangskörper (5, 51) gespannt wird, und
- der Spalt (s) zwischen einer Wandung (63) der Membran (61) und der dazu benachbarten Wandung (54) des Übergangskörpers (51) verläuft,
**dadurch gekennzeichnet, dass** der Spalt (s) eine Spaltbreite (b) derart dimensioniert aufweist, dass eine seitlich auf den äußeren Schwingkörper (3) wirkende Verstellkraft (F) den äußeren Schwingkörper (3) in seitlicher Richtung verschwenkt und dadurch die Wandung (63) der Membran (61) in Richtung des Spalts (s) gegen die benachbarte Wandung (54) des Übergangskörpers (51) drückt, wobei die Spaltbreite (b) derart dimensioniert ist, dass die Wandung (63) der Membran (61) an der Wandung (54) des Übergangskörpers (5, 51) anliegt, bevor eine plastische Verformung der Membran (61) eintritt.

2. Füllstands-Messvorrichtung nach Anspruch 1, bei der die Spanneinrichtung (8) einen Spannbolzen (82) aufweist, der sich von der Membran (61) aus zu einem Spannelement (80) erstreckt und dieses Spannelement (80) rückseitig gegen die Antriebs- und/oder Empfangseinrichtung (7) so spannt, dass die Antriebs- und/oder Empfangseinrichtung (7) vorderseitige gegen den inneren Schwingkörper (4) und rückseitig gegenüber dem äußeren Schwingkörper (3) eingespannt wird.

3. Füllstands-Messvorrichtung nach Anspruch 2, bei welcher der Spannbolzen (82) durch eine Spannbolzen-Durchtrittsöffnung (89) in dem Übergangskörper (51) hindurchführt.

4. Füllstands-Messvorrichtung nach Anspruch 1, bei der die Spaltbreite (b) derart dimensioniert ist, dass die Wandung (63) der Membran (61) an der Wandung (54) des Übergangskörpers (5, 51) anliegt, bevor die Spanneinrichtung (8), insbesondere ein Spannbolzen (82) und ein Spannelement (80) der Spanneinrichtung (8), rückseitig die Antriebs-und/oder Empfangseinrichtung (7) soweit entlasten, dass die Übertragung von Schwingungen zwischen der Antriebs- und/oder Empfangseinrichtung (7) und zumindest einem der Schwingkörper (3, 4) unterbrochen und/oder gestört wird.

5. Füllstands-Messvorrichtung nach Anspruch 4, bei der die Spaltbreite (b) kleiner oder gleich 0,3 mm ist, insbesondere kleiner oder gleich 0,2 mm ist.

6. Füllstands-Messvorrichtung nach einem der Ansprüche 4 - 5, bei der das Verhältnis zwischen der Spaltbreite (b) und dem Radius der Membran (61) kleiner oder gleich 1:45 ist, insbesondere kleiner oder gleich 1:72 ist.

7. Füllstands-Messvorrichtung nach einem vorstehenden Anspruch, bei der die Anordnung der Membran (61) und/oder des Spalts (s) zylindersymmetrisch um die Längsachse (X) umlaufend ausgebildet ist.

## Claims

1. Vibrator-type level meter (1) with
- an outer vibrator unit (3) and
- an inner vibrator unit (4),
which are arranged coaxially on a longitudinal axis (X),
- a drive and receiving device (7) for causing the vibrator units (3, 4) to oscillate, and for the recording of an oscillation of those vibrator units (3, 4) and
- a membrane (61) for the elastic coupling of the outer vibrator (3) unit such that, on the side turned away from the vibrator units (3, 4), the membrane (61) sits over a gap (s) spaced from a transducer unit (5), such that
- a tension device (8) is provided to brace the drive and/or receiving device (7) relative to the vibrator units (3, 4)
- the membrane (61) runs laterally to the longitudinal axis (X) of the outer vibrator unit (3) and passes on the outer side of the transducer unit (5, 51),
- the transducer unit (5) is positioned between the drive and/or receiving device (7) and the inner vibrator unit (4) in order to transmit oscillations between the drive and/or receiving device (7) and the inner vibrator unit (4), and partially extends laterally with a wall (54), i.e. on a plane perpendicular to the longitudinal axis (X), adjacent to the membrane (61),
- the tension device (8), the membrane (61) and the drive and/or receiving device (7) are tightly braced, so that the drive and/or receiving device (7) is tensed against the transducer unit (5, 51), and
- the gap (s) runs between a wall (63) of the membrane (61) and the wall (54) of the transducer unit (51) adjacent to it,
distinguished by the fact that the gap (s) has a gap width (b), so dimensioned that a rotational force (F) acting laterally on the outer vibrator unit (3) tilts the outer vibrator unit (3) sideways, thereby pressing the wall (63) of the membrane (61) in the direction of the gap (s) against the adjacent wall (54) of the transducer unit (51), the gap width (b) being so dimensioned that the wall (63) of the membrane (61) abuts the wall of the transducer unit (5, 51) before a plastic deformation of the membrane (61) occurs.

2. Vibrator-type level meter in accordance with claim 1, in which the tension device (8) has a clamping pin (82), which extends from the membrane (61) to a tension element (80), and this tension element (80) braces on its reverse against the drive and/or receiving device (7) so that the drive and/or receiving device (7) is clamped on its front side against the inner vibrator unit (4) and, on its reverse side, against the outer vibrator unit (3).

3. Vibrator-type level meter in accordance with claim 2, in which the clamping pin (82) passes through a clamping pin opening (89) in the transducer unit (51).

4. Vibrator-type level meter in accordance with claim 1, in which the gap width (b) is so dimensioned that the wall (63) of the membrane (61) abuts the wall (54) of the transducer unit (5, 51), before the tension device (8), in particular a clamping pin (82) and a tension element (80) in the tension device (8), release the drive and/or receiving device (7) on the reverse side to the extent that the transmission of oscillations between the drive and/or receiving device (7) and at least one of the vibrator units (3, 4) is interrupted or impaired.

5. Vibrator-type level meter in accordance with claim 4, in which the gap width (b) is less than or equal to 0.3 mm and, in particular, less than or equal to 0.2 mm.

6. Vibrator-type level meter in accordance with one of claims 4 - 5, in which the ratio between the gap width (b) and radius of the membrane (61) is less than or equal to 1:45 and, in particular, less than or equal to 1:72.

7. Vibrator-type level meter in accordance with a foregoing claim, in which the arrangement of the membrane (61) and/or the gap (s) is formed in a cylindrically symmetric manner around the longitudinal axis (X).

## Revendications

1. Dispositif de mesure de niveau de remplissage (1) comportant:
- un organe oscillant extérieur (3), et
- un organe oscillant intérieur (4), ces organes étant alignés coaxialement par rapport à un axe longitudinal (X),
- une installation d'entraînement et de réception (7) pour exciter les organes oscillants (3, 4) pour osciller et pour saisir l'oscillation des organes oscillants (3, 4), et
- une membrane (61) pour coupler élastiquement l'organe oscillant extérieur (3),
* la membrane (61) étant écartée sur son côté à l'opposé des organes oscillants (3, 4) par un intervalle (S) par rapport à un organe intermédiaire (5),
* une installation de mise en tension (8) mettant en tension l'installation d'entraînement et/ou l'installation de réception (7) par rapport aux organes oscillants (3, 4),
- la membrane (61) étant dirigée dans la direction latérale par rapport à l'axe longitudinal (X) de l'organe oscillant extérieur (3) et rejoignant côté extérieur l'organe intermédiaire (5, 51),
- l'organe intermédiaire (5) étant installé entre l'installation d'entraînement et/ou de réception (7) et l'organe oscillant intérieur (4) pour transmettre les oscillations entre l'installation d'entraînement et/ou l'installation de réception (7) et l'organe oscillant intérieur (4) et s'étendant avec une paroi (54) en partie dans la direction latérale, c'est-à-dire dans un plan perpendiculaire à l'axe longitudinal (X), au voisinage de la membrane (61),
- l'installation de mise en tension (8) mettant en tension la membrane (61) et l'installation d'entraînement et/ou de réception (7) de façon que cette installation d'entraînement et/ou de réception (7) soit tendue par rapport à l'organe intermédiaire (5, 51), et
- l'intervalle (S) passe entre la paroi (63) de la membrane (61) et la paroi (54) voisine de l'organe intermédiaire (51),
dispositif de mesure de niveau de remplissage,
**caractérisé en ce que**
l'intervalle (S) a une largeur (b) dimensionnée de façon qu'une force d'actionnement (F) agissant latéralement sur l'organe oscillant extérieur (3), bascule cet organe oscillant extérieur (3) dans la direction latérale et qu'ainsi, la paroi (63) de la membrane (61) est poussée en direction de l'intervalle (S) contre la paroi voisine (54) de l'organe intermédiaire (51),
* la largeur de l'intervalle (b) étant dimensionnée pour que la paroi (63) de la membrane (61) s'applique contre la paroi (54) de l'organe intermédiaire (5, 51) avant toute déformation plastique de la membrane (61).

2. Dispositif de mesure de niveau de remplissage selon la revendication 1,
dans lequel
l'installation de tension (8) comporte un goujon tendeur (82) qui s'étend à partir de la membrane (61) vers un élément tendeur (80) et met en tension cet élément tendeur (80) côté arrière contre l'installation d'entraînement et/ou de réception (7) pour que l'installation d'entraînement et/ou de réception (7) soit tendue côté avant contre l'organe oscillant intérieur (4) et côté arrière par rapport à l'organe oscillant extérieur (3).

3. Dispositif de mesure de niveau de remplissage selon la revendication 2,
**caractérisé en ce que**
le goujon tendeur (82) traverse un orifice de passage (89) dans l'organe intermédiaire (51).

4. Dispositif de mesure de niveau de remplissage selon la revendication 1,
**caractérisé en ce que**
la largeur (b) de l'intervalle est dimensionnée pour que la paroi (63) de la membrane (61) s'applique contre la paroi (54) de l'organe intermédiaire (5, 51) avant que l'installation de tension (8) notamment un goujon tendeur (82) et un élément de tension (80) de l'installation de tension (8) décharge côté arrière l'installation d'entraînement et/ou de réception (7) jusqu'à ce que la transmission des oscillations entre l'installation d'entraînement et/ou de réception (7) et au moins l'un des organes oscillants (3, 4) soit interrompu et/ou perturbé.

5. Dispositif de mesure de niveau de remplissage selon la revendication 4,
**caractérisé en ce que**
la largeur (b) de l'intervalle est inférieure ou égale à 0,3 mm et notamment inférieure ou égale à 0,2 mm.

6. Dispositif de mesure de niveau de remplissage selon l'une des revendications 4 et 5,
**caractérisé en ce que**
le rapport entre la largeur (b) de l'intervalle et le rayon de la membrane (61) est inférieur ou égal à 1/45 en particulier il est inférieur ou égal à 1/72.

7. Dispositif de mesure de niveau de remplissage selon l'une des revendications précédentes,
**caractérisé en ce que**
la disposition de la membrane (61) et/ou de l'intervalle (S) est selon une symétrie cylindrique par rapport à l'axe longitudinal (X).
